# EUROPEAN PATENT APPLICATION

(11) **EP 4 800 043 A1**
(43) Date of publication of application: **02.09.2026**
(21) Application number: 26157189.7
(22) Date of filing: 09.02.2026
(51) Int. Cl.: C08F 220/18, C08G 65/336

(54) **CURABLE COMPOSITION AND CURED PRODUCT**

(30) Priority: 20.02.2025 JP 2025025984
(71) Applicant: KANEKA CORPORATION, Osaka 530-8288 (JP)
(72) Inventor: JYONO, Hideharu, Hyogo, 6768688 (JP)
(74) Representative: Vossius & Partner Patentanwälte Rechtsanwälte mbB

(57) **Abstract**

To provide a curable composition that results in a cured product with a good balance of weather resistance and flexibility, and a cured product of the curable composition. A curable composition including a polyoxyalkylene-based polymer (A) having a reactive silicon group and a (meth)acrylic-based polymer (B) having a reactive silicon group and a structural unit derived from a (meth)acrylic ester, the (meth)acrylic-based polymer (B) having a number average molecular weight Mn, a ratio Mw/Mn of a weight average molecular weight Mw to the Mn, a glass transition temperature, and a breaking strength of a cured product thereof as measured by a specific method each falling within a predetermined range is used.

## Description

This application is based on and claims the benefit of priority from Japanese Patent Application No. 2025-025984, filed on 20 February 2025, the content of which is incorporated herein by reference.

### BACKGROUND OF THE INVENTION

### Field of the Invention

The present invention relates to a curable composition including a polyoxyalkylene-based polymer (A) having a reactive silicon group and a (meth)acrylic-based polymer (B) having a reactive silicon group; and a cured product of the curable composition.

### Related Art

An organic polymer having at least one reactive silicon group in a molecule can be cross-linked by formation of a siloxane bond accompanied by a hydrolysis reaction of a silyl group with moisture, etc., even at room temperature. It has been known that the organic polymer having a reactive silicon group has a property that results in a rubber-like cured product through such a cross-linking reaction.

Among organic polymers with reactive silicon groups, a polyoxyalkylene-based polymer having a reactive silicon group has been widely used in an architectural sealant or an industrial sealant. In these applications, excellent long-term weather resistance is required for a cured product of a curable composition including a polyoxyalkylene-based polymer having a reactive silicon group.

As a method for improving weather resistance of the cured product, it has been known to combine a (meth)acrylic-based polymer having a reactive silicon group with a polyoxyalkylene polymer having a reactive silicon group in a curable composition (see Patent Document 1).

Patent Document 1: PCT International Publication No. WO2014/024963

### SUMMARY OF THE INVENTION

Flexibility is often required for an architectural sealant or an industrial sealant. However, for a conventional curable composition including both a polyoxyalkylene-based polymer having a reactive silicon group and a (meth)acrylic-based polymer having a reactive silicon group as described in Patent Document 1, it is difficult to achieve both weather resistance and flexibility in a cured product.

The present invention has been made in view of the above problem, and an object of the present invention is to provide a curable composition that results in a cured product with a good balance of weather resistance and flexibility, and a cured product of the curable composition.

The present invention has been completed based on findings that a curable composition including a polyoxyalkylene-based polymer (A) having a reactive silicon group and a (meth)acrylic-based polymer (B) having a reactive silicon group and a structural unit derived from a (meth)acrylic ester, the (meth)acrylic-based polymer (B) having a number average molecular weight Mn, a ratio Mw/Mn of a weight average molecular weight Mw to the Mn, a glass transition temperature, and a breaking strength of a cured product thereof as measured by a specific method each falling within a predetermined range can be used to solve the above problem.

More specifically, the present invention provides the following (1) to (4):
(1) A curable composition including:
   a polyoxyalkylene-based polymer having a reactive silicon group (A); and
   a (meth)acrylic-based polymer having a reactive silicon group (B),
   the (meth)acrylic-based polymer (B) having a molecular chain including a structural unit derived from a (meth)acrylic ester,
   the (meth)acrylic-based polymer (B) having a number average molecular weight Mn of 10,000 to 20,000 in terms of polystyrene as measured by gel permeation chromatography,
   the (meth)acrylic-based polymer (B) having a ratio Mw/Mn of a weight average molecular weight Mw in terms of polystyrene as measured by gel permeation chromatography to the Mn of 1.6 or more,
   the (meth)acrylic-based polymer (B) having a glass transition temperature of 0°C or less,
   a cured product of the (meth)acrylic-based polymer (B) having a breaking strength of 0.020 to 0.300 N/mm²,
   the breaking strength being measured by a method including: mixing 100 parts by weight of the (meth)acrylic-based polymer (B) with 2 parts by weight of dibutyltin diacetylacetonate to obtain a mixture,
   curing the mixture to produce a sheet having a thickness of 0.25 ± 0.05 mm,
   cutting a strip specimen having a width of 5 mm from the sheet, and
   subjecting the strip specimen to a tension test at a tensile speed of 10 mm/min.
(2) The curable composition according to (1), in which the breaking strength is 0.050 to 0.300 N/mm².
(3) The curable composition according to (1) or (2), in which the breaking strength is 0.050 to 0.200 N/mm².
(4) A cured product of the curable composition according to any one of (1) to (3).

The present invention can provide a curable composition that results in a cured product with excellent weather resistance and flexibility, and a cured product of the curable composition.

### DETAILED DESCRIPTION OF THE INVENTION

The present invention will be described in detail.

### <<Curable composition>>

A curable composition includes a polyoxyalkylene-based polymer (A) having a reactive silicon group and a (meth)acrylic-based polymer (B) having a reactive silicon group. The (meth)acrylic-based polymer (B) has a molecular chain including a structural unit derived from a (meth)acrylic ester. The (meth)acrylic-based polymer (B) has a number average molecular weight Mn of 10,000 to 20,000 in terms of polystyrene as measured by gel permeation chromatography. The (meth)acrylic-based polymer (B) has a ratio Mw/Mn of a weight average molecular weight Mw in terms of polystyrene as measured by gel permeation chromatography to the Mn of 1.6 or more. The (meth)acrylic-based polymer (B) has a glass transition temperature of 0°C or less. A cured product of the (meth)acrylic-based polymer (B) has a breaking strength of 0.020 to 0.300 N/mm². The breaking strength is measured by a method including:
mixing 100 parts by weight of the (meth)acrylic-based polymer (B) with 2 parts by weight of dibutyltin diacetylacetonate to obtain a mixture,
curing the mixture to produce a sheet having a thickness of 0.25 ± 0.05 mm,
cutting a strip specimen having a width of 5 mm from the sheet, and
subjecting the strip specimen to a tension test at a tensile speed of 10 mm/min.

The above-mentioned curable composition results in a cured product with excellent weather resistance and flexibility.

Essential or optional components that the curable composition may include will be described.

### <Polyoxyalkylene polymer (A)>

A polyoxyalkylene-based polymer (A) (hereinafter may be simply referred to as "polymer (A)") has a reactive silicon group. The reactive silicon group is not particularly limited as long as it is a silicon-containing group having a silanol group or a silicon-containing group that can be hydrolyzed to produce a silanol group, and may be any of various known reactive silicon groups.

The reactive silicon group is preferably a group represented by Formula (1) below:

-SiR¹ₐX₃₋ₐ (1)

In Formula (1), R¹ is a substituted or unsubstituted hydrocarbon group having 1 to 20 carbon atoms or a triorganosiloxy group represented by R⁰₃SiO-. For the triorganosiloxy group, three R⁰ groups are each a hydrocarbon group having 1 to 20 carbon atoms. The three R⁰ groups may be identical to or different from each other. X is a hydroxy group or a hydrolyzable group. a is 0, 1, or 2. For each of R¹ and X, when there is a plurality of R¹ or X, they may be identical to or different from each other.

The polymer (A) has a polymer backbone and a polymer chain end bonded to the polymer backbone. As used in the specification of the present application and the claims, the polymer backbone is also referred to as a "main chain structure". The polymer backbone is a structure in which a plurality of structural units derived from monomers are continuously bonded together. The monomers may be of one type or a plurality of types.

The polymer chain end is a site located at an end of the polymer (A). A number of the polymer chain end of the polymer (A) is 2 when the main chain structure is linear, and 3 or more when the polymer backbone is branched. When the polymer (A) is a mixture of a polymer having a linear main chain structure and a polymer having a branched main chain structure, the number of polymer chain end is a number between 2 and 3 on average.

The reactive silicon group can be present in the polymer backbone or at the polymer chain end. In addition, two or more reactive silicon groups can be present at the polymer chain end. When a curable composition is used in an adhesive, a sealant, an elastic coating agent, a tackifier, etc., the reactive silicon group is preferably present at the polymer chain end in the polymer (A).

### (Reactive silicon group)

A reactive silicon group is a group that has a silanol group or a group that can be hydrolyzed to produce a silanol group. When the silanol group is produced from the reactive silicon group, the polymer (A) is cross-linked by a condensation reaction between the silanol groups. As mentioned above, the reactive silicon group is preferably a group represented by Formula (1) above.

Specific examples of R¹ in Formula (1) include an alkyl group such as a methyl group, an ethyl group, an n-propyl group, an isopropyl group, an n-butyl group, a tert-butyl group, an n-hexyl group, a 2-ethylhexyl group, or an n-dodecyl group; a unsaturated hydrocarbon group such as a vinyl group, an isopropenyl group, or an allyl group; an alkoxymethyl group such as methoxymethyl; a methyl halide group such as a chloromethyl group; a cycloalkyl group such as a cyclohexyl group; an aryl group such as a phenyl group, a toluyl group, or a 1-naphthyl group; an aralkyl group such as a benzyl group, etc. Among these groups, the alkyl group or the aryl group is preferred, the methyl group, the ethyl group, or the phenyl group is more preferred, the methyl group or the ethyl group is further preferred, and the methyl group is particularly preferred. When there is a plurality of R¹ in Formula (1), the plurality of R¹ may be identical to each other or a combination of two or more types of different groups.

X in Formula (1) is a hydroxy group or a hydrolyzable group. The hydrolyzable group is not particularly limited and may be any known hydrolyzable group. Specific examples of the hydrolyzable group include a hydrogen atom, a halogen atom, an alkoxy group, an acyloxy group, a ketoximate group, an amino group, an amide group, an acid amide group, an aminooxy group, a mercapto group, or an alkenyloxy group, etc. Among these, the alkoxy group, the acyloxy group, the ketoximate group, or the alkenyloxy group is preferred, and from the viewpoint of being mildly hydrolyzable and easily handleable, the alkoxy group such as a methoxy group or an ethoxy group is more preferred. The methoxy group is preferred from the viewpoint of ease of adjusting curability of a curable composition.

The reactive silicon group represented by Formula (1) is not particularly limited. Specific examples of the reactive silicon group represented by Formula (1) include a dimethoxymethylsilyl group, a diethoxymethylsilyl group, a trimethoxysilyl group, a triethoxysilyl group, a dimethoxyphenylsilyl group, a methoxymethyldimethoxysilyl group, a methoxymethyldiethoxysilyl group, a triisopropenyloxysilyl group, a triacetoxysilyl group, etc. Among these, the dimethoxymethylsilyl group or the trimethoxysilyl group is preferred from the viewpoint of ease of synthesis of the polymer (A). The trimethoxysilyl group or the methoxymethyldimethoxysilyl group is preferred from the viewpoint of excellent curability. The dimethoxymethylsilyl group is particularly preferred from the viewpoint of excellent stability.

### (Main chain structure of polymer (A))

A polymer (A) is a polyoxyalkylene-based polymer. Thus, a main chain structure of the polymer is composed of a polyoxyalkylene polymer. Specific examples of the main chain structure of the polymer (A) include a polyoxyalkylene-based polymer such as a polyoxyethylene polymer, a polyoxypropylene polymer, a polyoxybutylene polymer, a polyoxytetramethylene polymer, a polyoxyethylene-polyoxypropylene copolymer, a polyoxypropylene-polyoxybutylene copolymer, etc.

Among the polyoxyalkylene-based polymers, polyoxypropylene is a preferred main chain structure from the viewpoints of its excellent deep curing property as a one-part composition as well as its excellent adhesion.

The polyoxyalkylene-based polymer is a polymer having a repeating unit represented by -R³-O-. R³ is a linear or branched alkylene group having 1 to 14 carbon atoms. R³ is more preferably a linear or branched alkylene group having 2 to 4 carbon atoms. Specific examples of the repeating unit represented by -R³-O- include -CH₂O-, -CH₂CH₂O-, -CH₂CH(CH₃)O-, -CH₂CH(C₂H₅)O-, -CH₂C(CH₃)(CH₃)O-, -CH₂CH₂CH₂CH₂O-, etc. The main chain structure of the polyoxyalkylene-based polymer may be composed of only one type of repeating unit or two or more types of repeating units. A polyoxypropylene polymer having 50% by weight or more, preferably 80% by weight or more of oxypropylene repeating units in a main chain structure of the polymer is preferred as the polyoxyalkylene-based polymer, especially when the curable composition is used for a sealant, an adhesive, etc. This is because such a polyoxyalkylene-based polymer is amorphous and has relatively low viscosity.

The main chain structure of the polyoxyalkylene-based polymer may be linear or branched.

The polyoxyalkylene-based polymer is preferably a polymer obtained by a ring-opening polymerization reaction of a cyclic ether compound by means of a polymerization catalyst in the presence of an initiator.

Examples of the cyclic ether compound include ethylene oxide, propylene oxide, butylene oxide, tetramethylene oxide, tetrahydrofuran, etc. The cyclic ether compound may be used alone, or two or more thereof may be used in combination. Among these cyclic ether compounds, propylene oxide is particularly preferred because it gives a polyether polymer that is amorphous and has relatively low viscosity.

Specific examples of the initiator include an alcohol such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, or sorbitol; a polyoxyalkylene-based polymer such as polyoxypropylene diol, polyoxypropylene triol, polyoxyethylene diol, or polyoxyethylene triol, etc.

A method for synthesizing the polyoxyalkylene-based polymer is not particularly limited. Examples of the method for synthesizing the polyoxyalkylene-based polymer include, for example, a polymerization method by means of an alkaline catalyst such as KOH; a polymerization method using a transition metal compound-porphyrin complex catalyst such as a complex obtained by reacting an organoaluminum compound with porphyrin as described in Japanese Unexamined Patent Application, Publication No. S61-215623; a polymerization method by means of a composite metal cyanide complex catalyst as described in Japanese Examined Patent Application, Publication Nos. S46-27250 and S59-15336, U.S. Patent Nos. 3,278,457, 3,278,458, 3,278,459, 3,427,256, 3,427,334, and 3,427,335, etc.; a polymerization method by means of a catalyst composed of a polyphosphazene salt as exemplified in Japanese Unexamined Patent Application, Publication No. H10-273512; a polymerization method by means of a catalyst composed of a polyphosphazene compound as exemplified in Japanese Unexamined Patent Application, Publication No. H11-060722, etc. The polymerization method by means of a composite metal cyanide complex catalyst is more preferred from the viewpoints of its lower production cost and an ability to give a polymer with a narrow molecular weight distribution.

The main chain structure of the polymer (A) may be a polyoxyalkylene-based polymer including a bond other than an ether bond, such as a urethane bond or a urea bond, to the extent that the desired effect is not significantly impaired. Specific examples of a polymer having such a main chain structure include a polyurethane prepolymer, a polyurea prepolymer, etc.

The polyurethane prepolymer can be obtained by a known method such as a reaction of a polyol compound with a polyisocyanate compound. The polyurea prepolymer can be obtained by a known method such as a reaction of a polyamine compound with a polyisocyanate compound. The main chain structure may be a prepolymer having a combination of a urethane bond and a urea bond, the prepolymer being obtained by reacting a polyol compound and a polyamine compound with a polyisocyanate compound.

Specific examples of the polyol compound include polyether polyol, polyester polyol, polycarbonate polyol, polyether polyester polyol, etc.

Specific examples of the polyisocyanate compound include diphenylmethane diisocyanate, tolylene diisocyanate, xylylene diisocyanate, methylene-bis(cyclohexylisocyanate), isophorone diisocyanate, hexamethylene diisocyanate, etc.

An end of the polyurethane prepolymer may be either a hydroxy group or an isocyanate group. An end of the polyurea prepolymer may be either an amino group or an isocyanate group.

For a cured product of a curable composition including, as the polymer (A), a polymer having one or more bonds selected from a urethane bond, a urea bond, or an ester bond in its main chain structure, a cured product may have lower strength due to cleavage of the urethane bond, the urea bond, or the ester bond in the main chain structure caused by heat, etc.

When a polymer including an amide bond in its main chain structure is used as an organic polymer, curability of a curable composition may be improved. The amide bond is represented by, for example, -NR⁴-C(=O)-. R⁴ is a hydrogen atom or an optionally substituted organic group. When an amount of the amide bond in the main chain structure falls within an appropriate range, the polymer has low viscosity, a decrease in strength of a cured product due to cleavage of the amide bond caused by heat, etc. is less likely to occur, viscosity of the curable composition is less likely to increase during storage, and the curable composition has good workability.

When the polymer (A) includes an amide bond in its main chain structure, a number of the amide bond is preferably 1 to 10, more preferably 1.5 to 5, and further preferably 2 to 3 on average per molecule. When the number of the amide bond on average per molecule is within such a range, a curable composition has good curability, the polymer (A) has low viscosity, and the polymer (A) and the curable composition are easy to handle.

For the polymer (A) as described above, a polyoxyalkylene-based polymer that does not include a urethane bond, a urea bond, an ester bond, or an amide bond in its main chain structure is most preferred from the viewpoint of giving a curable composition with excellent storage stability and workability.

The polymer (A) is preferably a polymer obtained by introducing a reactive silicon group into a polymer by any of the following methods (a) to (d):
(a) a method in which a terminal hydroxy group of a hydroxy group-terminated organic polymer is converted to a carbon-carbon unsaturated group and then the carbon-carbon unsaturated group is hydrosilylated with hydrosilane represented by HSiR¹ₐX₃₋ₐ
   in which R¹, X, and a are the same as described for Formula (1);
(b) a method in which a terminal hydroxy group of a hydroxy group-terminated organic polymer is reacted with an isocyanate alkylsilane compound represented by OCN-W-SiR¹ₐX₃₋ₐ in which W is a divalent organic group, and
   R¹, X, and a are the same as described for Formula (1);
(c) a method in which a terminal hydroxy group of a hydroxy group-terminated organic polymer is converted to a carbon-carbon unsaturated group and then subjected to an en-thiol reaction between the carbon-carbon unsaturated group and a mercaptoalkylsilane compound represented by HS-W-SiR¹ₐX₃₋ₐ in which W is a divalent organic group, and
   R¹, X, and a are the same as described for Formula (1);
(d) a method in which a hydroxy group-terminated organic polymer is reacted with a polyisocyanate compound to synthesize an NCO group-terminated organic polymer and then the terminal NCO group is reacted with a silane compound represented by HNR⁵-W-SiR¹ₐX₃₋ₐ or HS-W-SiR¹ₐX₃₋ₐ in which W is a divalent organic group,
   R⁵ is a hydrogen atom or an alkyl group, and
   R¹, X, and a are the same as described for Formula (1).

In the methods (a) and (c) above, examples of the terminal carbon-carbon unsaturated group include a vinyl group, an allyl group, a methallyl group, an allenyl group, a propargyl group, etc.

In any of the methods (b) to (d) above, a polymer (A) obtained using a silane compound in which W is methylene exhibits very high curability.

The method (a) is preferred because a polymer (A) with good storage stability is easily obtained. The methods (b), (c), and (d) are preferred because a high conversion rate can be achieved in a relatively short reaction time.

Examples of a method for introducing a reactive silicon group using the method (a) include the methods proposed in Japanese Examined Patent Application, Publication Nos. S45-36319 and S46-12154, Japanese Unexamined Patent Application, Publication Nos. S50-156599, S54-6096, S55-13767, S55-13468, and S57-164123, Japanese Examined Patent Application, Publication No. H3-2450, U.S. Patent Nos. 3,632,557, 4,345,053, 4,366,307, and 4,960,844, or the methods proposed in Japanese Unexamined Patent Application, Publication Nos. S61-197631, S61-215622, S61-215623, and S61-218632, in which a reactive silicon group is introduced into a polyoxypropylene polymer with a high molecular weight and a narrow molecular weight distribution, that is, a number average molecular weight of 6,000 or more and a ratio Mw/Mn of 1.6 or less, or the method proposed in Japanese Unexamined Patent Application, Publication No. H3-72527. A method for introducing more than one reactive silicon groups into a molecular end is exemplified by the method proposed in Japanese Patent No. 6096320.

A number average molecular weight (Mn) of the polymer (A) is not particularly limited. The number average molecular weight (Mn) of the polymer (A) is preferably 5,000 to 40,000 and more preferably 6,000 to 30,000 in terms of polystyrene as measured by gel permeation chromatography (GPC).

A molecular weight of the polymer (A) can also be expressed as a terminal group-based molecular weight which is determined by directly measuring a terminal group concentration of a polymer precursor prior to introduction of a reactive silicon group thereinto using a titration analysis based on the principle of a method for measuring a hydroxyl value according to JIS K 1557 and a method for measuring an iodine value as defined in JIS K 0070 in view of a structure of the polymer (a degree of branching defined by a polymerization initiator to be used). The terminal group-based molecular weight of the polymer (A) may also be determined by creating a calibration curve between a number average molecular weight determined with a standard GPC measurement and the terminal group-based molecular weight of the polymer precursor, and converting the number average molecular weight determined with GPC of the polymer (A) into the terminal group-based molecular weight.

A molecular weight distribution (Mw/Mn) of the polymer (A) is not particularly limited. The molecular weight distribution of the polymer (A) is preferably narrow. Specifically, the molecular weight distribution is preferably 1.6 or less, more preferably 1.4 or less, further preferably 1.3 or less, and particularly preferably 1.2 or less. The molecular weight distribution of the polymer (A) can be determined from a number average molecular weight and a weight average molecular weight obtained with a GPC measurement.

To obtain a good rubber-like cured product, a reactive silicon group of the polymer (A) is preferably present at a polymer chain end. A number of the reactive silicon group is preferably 0.5 or more and 3.0 or less, more preferably 0.6 or more and 2.5 or less, further preferably 0.7 or more and 2.2 or less, and particularly preferably 0.8 or more and 2.0 or less on average per the polymer chain end. When the number of reactive silicon group is 0.5 or more, the polymer (A) or a curable composition has good curability, and a cured product of the curable composition has good rubber elasticity.

A number of the reactive silicon group per molecule is preferably 1 to 7, more preferably 1 to 4, and particularly preferably 1 to 3 on average.

An organic polymer having two or more reactive silicon groups at a polymer chain end as described in PCT International Publication No. WO2013/180203 can also be used as the polymer (A). Such a polymer (A) exhibits high curability, and the resulting cured product can be expected to have high strength and high resiliency.

Specific examples of commercially available products of the polymer (A) include various reactive silicon group-containing polyoxypropylene products such as KANEKA MS POLYMER (registered trademark) or KANEKA SILYL (registered trademark). These commercially available products of the polymer (A) are all products of KANEKA CORPORATION. EXCESTAR (registered trademark, manufactured by AGC Inc., GENIOSIL (registered trademark, manufactured by WACKER, STP manufactured by RISUN POLYMER, etc., can also be used.

### <(Meth)acrylic-based polymer (B)>

A (meth)acrylic-based polymer (B) (hereinafter may be simply referred to as "polymer (B)") has a reactive silicon group. The reactive silicon group is not particularly limited as long as it can form a siloxane bond. The reactive silicon group is preferably the reactive silicon group represented by Formula (1). The polymer (B) has a polymer backbone and a polymer chain end bonded to the polymer backbone. The polymer backbone is a structure in which a plurality of structural units derived from monomers are continuously bonded together. The monomer may be of one type or a plurality of types.

The polymer chain end is a site located at an end of the polymer (B). A number of the polymer chain end of the polymer (B) is 2 when a main chain structure is linear.

The reactive silicon group can be present in the polymer backbone and at the polymer chain end. When a curable composition is used in an adhesive, a sealant, an elastic coating, a tackifier, etc., the reactive silicon group is preferably present at the polymer chain end in the polymer (B) .

A reactive silicon group that the polymer (B) has may be identical to or different from a reactive silicon group that the polymer (A) has.

### (Main chain structure of polymer (B))

A polymer (B) includes a structural unit derived from a (meth)acrylic ester.

A (meth)acrylic acid alkyl ester means an acrylic acid alkyl ester and/or a methacrylic acid alkyl ester. Specific examples of the acrylic acid alkyl ester include methyl acrylate, ethyl acrylate, n-propyl acrylate, n-butyl acrylate, isobutyl acrylate, tert-butyl acrylate, n-hexyl acrylate, 2-ethylhexyl acrylate, n-decyl acrylate, n-undecyl acrylate, lauryl acrylate, n-tridecyl acrylate, myristyl acrylate, cetyl acrylate, stearyl acrylate, behenyl acrylate, etc.

Specific examples of the methacrylic acid alkyl ester include methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, n-decyl methacrylate, n-undecyl methacrylate, lauryl methacrylate, n-tridecyl methacrylate, myristyl methacrylate, cetyl methacrylate, stearyl methacrylate, behenyl methacrylate, etc.

A ratio of a weight of the structural unit derived from a (meth)acrylic acid ester to a weight of the polymer (B) is preferably 50% by weight or more, more preferably 70% by weight or more, further preferably 80% by weight or more, and particularly preferably 90% by weight or more.

From the viewpoints of compatibility of the polymer (B) with the polymer (A), etc. and stability of the polymer (B), the (meth)acrylic acid alkyl ester for use in preparation of the polymer (B) is preferably a (meth)acrylic acid alkyl ester including an alkyl group having 1 to 30 carbon atoms.

The (meth)acrylic acid alkyl ester including an alkyl group having 1 to 30 carbon atoms is represented by Formula (B1) below:

CH₂=CR^{b1}COOR^{b2} (B1)

in which R^{b1} is a hydrogen atom or a methyl group; and
R^{b2} is an alkyl group having 1 to 30 carbon atoms.

Examples of R^{b2} in Formula (B1) include an alkyl group having 1 to 30 carbon atoms such as a methyl group, an ethyl group, a n-propyl group, a n-butyl group, a tert-butyl group, a 2-ethylhexyl group, a lauryl group, an n-tridecyl group, a cetyl group, a stearyl group, etc. The alkyl group for R^{b2} more preferably has 1 to 20 carbon atoms.

A monomer for use in production of the polymer (B) may include another monomer other than the (meth)acrylic acid alkyl ester. Examples of the other monomer include acrylic acid or methacrylic acid; a (meth)acrylamide such as acrylamide, methacrylamide, N-methylolacrylamide, or N-methylolmethacrylamide; an epoxy group-containing (meth)acrylic ester such as glycidyl acrylate or glycidyl methacrylate; an amino group-containing unsaturated compound such as 2-(N,N-diethylamino)ethyl methacrylate or 2-aminoethyl vinyl ether; an epoxyalkyl (meth)acrylate such as glycidyl (meth)acrylate, 2-methylglycidyl (meth)acrylate, 3,4-epoxybutyl (meth)acrylate, or 6,7-epoxyheptyl (meth)acrylate; acrylonitrile or methacrylonitrile; styrene such as styrene or α-methylstyrene; an alkyl vinyl ether; vinyl chloride; a fatty acid vinyl esters such as vinyl acetate or vinyl propionate, etc.

A number average molecular weight of the polymer (B) is preferably 10,000 to 20,000 and preferably 12,000 to 18,000 in terms of polystyrene as measured by GPC. A weight average molecular weight (Mw) of the polymer (B) is preferably 16,000 to 80,000 and more preferably 20,000 to 60,000 in terms of polystyrene as measured by GPC.

A molecular weight distribution (Mw/Mn), which is a ratio of the weight average molecular weight Mw to Mn of the polymer (B), is not particularly limited. The molecular weight distribution of the polymer (B) is preferably narrow. Specifically, the molecular weight distribution is preferably 1.6 or more, more preferably 2.0 or more, and further preferably 2.4 or more. An upper limit of the molecular weight distribution (Mw/Mn) may be, for example, 4.0 or less or 3.5 or less. The molecular weight distribution of the polymer (B) can be determined from a number average molecular weight and a weight average molecular weight obtained by a GPC measurement.

The polymer (B) can be produced by a conventional vinyl polymerization method. Examples of the vinyl polymerization method include, for example, a solution polymerization method by means of a radical reaction, a bulk polymerization method, etc. The vinyl polymerization method is not limited to these methods. A reaction for the above-mentioned polymerization is typically carried out at 50 to 150°C in the presence of a monomer, a radical initiator, a chain transfer agent, a solvent, etc. A condition under which the reaction for the polymerization is carried out is not limited to those mentioned above.

Specific examples of the radical initiator include azobisisobutyronitrile, 2,2'-azobis(2-methylbutyronitrile), benzoyl peroxide, etc. Specific examples of the chain transfer agent include a mercaptan such as n-dodecyl mercaptan, tert-dodecyl mercaptan, or lauryl mercaptan, a halogen-containing compound, etc. For example, an ether, a hydrocarbon, or an ester, which are inert to the reaction for the polymerization, can be preferably used as the solvent.

Various methods have been known for introducing a reactive silicon group into a (meth)acrylic-based polymer. Specific examples thereof include:
I) a method in which a compound having an ethylenically unsaturated double bond and a reactive silicon group is copolymerized with a (meth)acrylic acid alkyl ester represented by Formula (B1);
II) a method in which a compound having an ethylenically unsaturated double bond and a reactive functional group (e.g., acrylic acid) is copolymerized with a (meth)acrylic acid alkyl ester represented by Formula (B1) to obtain a copolymer and then the reactive functional group in the copolymer is reacted with reactive silicon and a compound capable of reacting with the reactive group (e.g., a reactive silicon group-containing isocyanate compound);
III) a method in which a (meth)acrylic acid alkyl ester represented by Formula (B1) is polymerized in the presence of a mercaptan having a reactive silicon group serving as a chain transfer agent;
IV) a method in which a (meth)acrylic acid alkyl ester represented by Formula (B1) is polymerized using an azobisnitrile compound having a reactive silicon group or a disulfide compound having a reactive silicon group as an initiator; and
V) a method in which a (meth)acrylic acid alkyl ester represented by Formula (B1) is polymerized with a living radical polymerization method to obtain a polymer and then a reactive silicon group is introduced at a molecular chain end of the polymer, and at least two methods of I), II), and III) may also be used in combination. The method for introducing a reactive silicon group into a (meth)acrylic-based polymer is not limited to the above methods, and I), II), III), a combination of I) and III), or II) and III) is preferred and I), II), or a combination of I) and III) is more preferred.

The compound having an ethylenically unsaturated double bond and a reactive silicon group to be used in the method I) above is preferably a compound represented by Formula (B2) below:

CH₂=CR^{b5}COOR^{b6}-SiR¹ₐX₃₋ₐ (B2)

in which R¹, X, and a are the same as described for R¹, X, and
a in Formula (1);
R^{b5} is a hydrogen atom or a methyl group; and
R^{b6} is an alkylene group having 1 to 6 carbon atoms.

The alkylene group for R^{b6} in Formula (B2) is an alkylene group having 1 to 6 carbon atoms such as a methylene group, an ethane-1,2-diyl group (ethylene group), or a propane-1,3-diyl group (trimethylene group) and preferably an alkylene group having 1 to 4 carbon atoms.

Specific examples of the compound having an ethylenically unsaturated double bond and a reactive silicon group include γ methacryloxypropylalkoxysilane such as γ-methacryloxypropyltrimethoxysilane, γ-methacryloxypropylmethyldimethoxysilane, or γ-methacryloxypropyltriethoxysilane; γ-acryloxypropylalkoxysilane such as γ-acryloxypropyltrimethoxysilane, γ-acryloxypropylmethyldimethoxysilane, or γ-acryloxypropyltriethoxysilane; vinylalkoxysilane such as vinyltrimethoxysilane, vinylmethyldimethoxysilane, or vinyltriethoxysilane, etc.

Examples of the reactive functional group in the compound having an ethylenically unsaturated double bond and a reactive functional group to be used in the method II) above include an amino group, a hydroxy group, a carboxy group, etc. Examples of a group capable of reacting with the reactive functional group include an isocyanate group. Another example of the reactive functional group includes an allyl group as described in Japanese Unexamined Patent Application, Publication Nos. S54-36395, H01-272654, and H02-214759. A group capable of reacting with the allyl group includes a silicon hydride group (H-Si).

Examples of the mercaptan having a reactive silicon group serving as the chain transfer agent to be used in the method III) above include γ-mercaptopropyltrimethoxysilane, γ-mercaptopropylmethyldimethoxysilane, γ mercaptopropyltriethoxysilane, etc.

Examples of the azobisnitrile compound or the disulfide compound having a reactive silicon group to be used in the method IV) above include an azobisnitrile compound having an alkoxysilyl group as described in Japanese Unexamined Patent Application, Publication Nos. S60-23405, S62-70405, etc., a disulfide compound having an alkoxysilyl group, etc.

The method V) above includes the method described in Japanese Unexamined Patent Application, Publication No. H09-272714, etc.

A method in which mercaptan having a reactive silicon group is used in combination with a radical polymerization initiator having a reactive silicon group as described in Japanese Unexamined Patent Application, Publication Nos. S59-168014 and S60-228516 may also be used.

A breaking strength of a cured product of the polymer (B) is 0.020 to 0.300 N/mm², preferably 0.050 to 0.300 N/mm², and more preferably 0.050 to 0.200 N/mm². When the breaking strength of the cured product of the polymer (B) is 0.020 to 0.300 N/mm², a cured product of a composition in which the polymer (B) is mixed with the polymer (A) exhibits high weather resistance and flexibility. Note that, excessively high breaking strength tends to, for example, decrease elongation at break and decrease flexibility of a cured product of a curable composition.

The breaking strength of a cured product of the polymer (B) is measured as follows. A method for measuring the breaking strength of the cured product of the polymer (B) includes mixing 100 parts by weight of the (meth)acrylic-based polymer (B) with 2 parts by weight of dibutyltin diacetylacetonate to obtain a mixture,
curing the mixture to produce a sheet having a thickness of 0.25 ± 0.05 mm,
cutting a strip specimen having a width of 5 mm from the sheet, and
subjecting the strip specimen to a tension test at a tensile speed of 10 mm/min.

A method for adjusting the breaking strength of the cured product of the polymer (B) measured by the above method is not particularly limited. For example, increasing an amount of a structural unit having a reactive silicon group in the polymer (B) tends to increase the breaking strength. The higher a Tg of the polymer (B), the higher the breaking strength tends to be.

An amount of the polymer (B) to be used in a curable composition is not particularly limited unless the desired effect is impaired. For the curable composition, a ratio W_{A}/W_{B} of a weight W_{A} of the polyoxyalkylene-based polymer (A) to a weight W_{B} of the (meth)acrylic polymer (B) is preferably 95/5 to 5/95, more preferably 90/10 to 20/80, and further preferably 80/20 to 30/70.

A glass transition temperature (Tg) of the polymer (B) is 0°C or less, more preferably -80 to -10°C, and further preferably -60 to -20°C. Note that, the Tg is determined from the Fox equation below.

Fox equation: $1 / \left(Tg\left(K\right)\right) = Σ \left(Mi/Tgi\right)$ in which Mi is a weight fraction of a monomer i component constituting a polymer and Tgi is a glass transition temperature (K) of a homopolymer of the monomer i.

### <Other additives>

A curable composition may include other additives in addition to the polymer (A) and the polymer (B) to the extent that the desired effect is not impaired. Examples of the other additives include a curing catalyst, a filler, a tackifier, a plasticizer, a solvent, a diluent, a thixotropic agent, an antioxidant, a light stabilizer, a UV absorber, a physical property modifier, a tackifying resin, an epoxy group-containing compound, a photocurable material, an oxygen-curable material, an epoxy resin, another resin, a surface modifier, a foaming agent, a curability modifier, a flame retardant, a silicate, a radical inhibitor, a metal deactivator, a phosphorus-based peroxide decomposer, a lubricant, a pigment, or a fungicide, etc.

### (Curing catalyst)

A curable composition preferably includes a curing catalyst for the purpose of promoting a hydrolytic condensation reaction between the polymer (A) and a reactive silicon group that the polymer (B) has and chain-extending or cross-linking the polymer.

Examples of the curing catalyst include an organotin compound, a metal carboxylate, an amine compound, a carboxylic acid, an alkoxy metal, etc.

Specific examples of the organotin compound include dibutyltin dilaurate, dibutyltin dioctanoate, dibutyltin bis(butylmaleate), dibutyltin diacetate, dibutyltin oxide, dibutyltin diacetylacetonate, dioctyltin diacetylacetonate, dioctyltin dilaurate, dioctyltin distearate, dioctyltin diacetate, dioctyltin oxide, a reaction product of dibutyltin oxide and a silicate compound, a reaction product of dioctyltin oxide and a silicate compound, a reaction product of dibutyltin oxide and phthalic acid ester, etc.

Specific examples of the metal carboxylate include tin carboxylate, bismuth carboxylate, titanium carboxylate, zirconium carboxylate, iron carboxylate, etc. A salt formed by combining the below-described carboxylic acid and any of various metals may also be used as the metal carboxylate.

Specific examples of the amine compound include amines such as octyl amine, 2-ethylhexyl amine, lauryl amine, or stearyl amine; a nitrogen-containing heterocyclic compound such as pyridine, 1,8-diazabicyclo[5,4,0]undecene-7 (DBU) or 1,5-diazabicyclo[4,3,0]nonene-5 (DBN); a guanidine such as guanidine, phenylguanidine, or diphenylguanidine; a biguanide such as butylbiguanide, 1-o-tolylbiguanide, or 1-phenylbiguanide; an amino group-containing silane coupling agent; a ketimine compound, etc.

Specific examples of the carboxylic acid include acetic acid, propionic acid, butyric acid, 2-ethylhexanoic acid, lauric acid, stearic acid, oleic acid, linoleic acid, neodecanoic acid, versatic acid, etc.

Specific examples of the alkoxy metal include a titanium compound such as tetrabutyl titanate, titanium tetrakis(acetylacetonate), or diisopropoxytitanium bis(ethylacetoacetate); an aluminum compound such as aluminum tris(acetylacetonate) or diisopropoxyaluminium ethyl acetoacetate; a zirconium compound such as zirconium tetrakis(acetylacetonate), etc. As another silanol condensation catalyst, a fluorine anion-containing compound, a photoacid generator, or a photobase generator may also be used. Two or more types of different catalysts may also be used in combination as the curing catalyst. An amount of the curing catalyst to be used is preferably 0.001 to 20 parts by weight, more preferably 0.01 to 15 parts by weight, and particularly preferably 0.01 to 10 parts by weight, relative to 100 parts by weight of a total weight of the polyoxyalkylene-based polymer (A) and the (meth)acrylic-based polymer (B).

### (Filler)

Various fillers may be incorporated into a curable composition. Examples of the filler include a reinforcing filler such as fumed silica, precipitated silica, crystalline silica, fused silica, dolomite, silicic anhydride, hydrous silicic acid, or carbon black; a filler such as heavy calcium carbonate, colloidal calcium carbonate, magnesium carbonate, siliceous earth, calcined clay, clay, talc, titanium oxide, bentonite, organic bentonite, ferric oxide, aluminum fine powder, flint powder, zinc oxide, activated zinc oxide, or resin powder; a fibrous filler such as an asbestos, a glass fiber, or a filament, etc. Examples of the resin powder include PVC powder, PMMA powder, etc. When the filler is used, an amount of the filler to be used is preferably 1 to 300 parts by weight and more preferably 10 to 200 parts by weight, relative to 100 parts by weight of a total weight of the polyoxyalkylene-based polymer (A) and the (meth)acrylic-based polymer (B).

When a cured product with high strength is desired to be obtained using any of these fillers, a filler selected from fumed silica, precipitable silica, crystalline silica, fused silica, dolomite, silicic anhydride, hydrous silicic acid, carbon black, surface-treated fine calcium carbonate, calcined clay, clay, or activated zinc oxide, etc. can be mainly preferably used. An amount of the filler to be preferably used from the viewpoint of strength of a cured product is preferably 1 to 200 parts by weight, relative to 100 parts by weight of a total weight of the polyoxyalkylene-based polymer (A) and the (meth)acrylic-based polymer (B). When a cured product with low strength and high elongation at break is desired to be obtained, a filler selected from titanium oxide, calcium carbonate, magnesium carbonate, talc, ferric oxide, zinc oxide, or shirasu balloon can be mainly preferably used. An amount of the filler to be preferably used from the viewpoint of elongation at break of a cured product is preferably 5 to 200 parts by weight, relative to 100 parts by weight of a total weight of the polyoxyalkylene-based polymer (A) and the (meth)acrylic-based polymer (B).

For the purpose of decreasing a weight (density) of a cured product, a curing composition may include a spherical hollow body such as a balloon. The balloon is a spherical filler that has a hollow interior. Examples of a material of the balloon include an inorganic material such as glass, shirasu, or silica, or an organic material such as a phenolic resin, a urea resin, polystyrene, saran, or acrylonitrile. The material of the balloon is not limited thereto. The material of the balloon may be a composite material composed of an inorganic material and an organic material. A plurality of layers may be laminated as the material of the balloon. One type of balloon may be used alone, or two or more types of baloons may be used in combination. A surface of the balloon may be surface-machined, coated, or treated with various surface treatment agents. For example, an organic balloon coated with calcium carbonate, talc, titanium oxide, etc., or an inorganic balloon surface-treated with a silane coupling agent can be used.

An amount of the spherical hollow body (balloon) to be used is preferably 0.01 to 30 parts by weight, relative to 100 parts by weight of a total weight of the polyoxyalkylene-based polymer (A) and the (meth)acrylic-based polymer (B). A lower limit thereof is preferably 0.1 parts by weight, and an upper limit thereof is more preferably 20 parts by weight. When the spherical hollow body is used in an amount falling within the above range, a good property of a cured composition is good and a cured product with excellent elongation and breaking strength can be easily formed.

### (Tackifier)

A curable composition may include a tackifier. Examples of the tackifier include a silane coupling agent. The silane coupling agent is a compound that has a hydrolyzable silicon group and a functional group other than the hydrolyzable silicon group in its molecule. When a curable composition including the silane coupling agent is applied to various adherends, which are inorganic substrates such as glass, aluminum, stainless, zinc, copper, or mortar or organic substrates such as vinyl chloride, acryl, polyester, polyethylene, polypropylene, or polycarbonate, a significant adhesion improvement effect is exerted under a condition without or with a primer treatment. When the curable composition is used under the condition without a primer treatment, a particularly remarkable adhesion improvement effect to the various adherends is achieved.

A hydrolyzable group in a hydrolyzable silicon group that the silane coupling agent has is not particularly limited. Examples of the hydrolyzable group include a hydrogen atom, a halogen atom, an alkoxy group, an aryloxy group, an alkenyloxy group, an acyloxy group, a ketoximate group, an amino group, an amide group, an acid amide group, an aminooxy group, a mercapto group, etc. Among these, the halogen atom, the alkoxy group, the alkenyloxy group, or the aryloxy group is preferred from the viewpoint of its high activity. A chlorine atom or an alkoxy group is preferred from the viewpoint of ease of introduction into the silane coupling agent. From the viewpoint of being mildly hydrolyzable and easily handleable, an alkoxy group such as a methoxy group or an ethoxy group is more preferred, and a methoxy group or an ethoxy group is particularly preferred. An ethoxy group or an isopropenyloxy group is preferred from the viewpoint of safety because ethanol or acetone is desorbed by a reaction, respectively. A number of the hydrolyzable group to be bonded to a silicon atom in the silane coupling agent may preferably be three to ensure good adhesion. Alternatively, two hydrolyzable groups may be preferred to ensure storage stability of a curable composition.

Specific examples of the amino silane coupling agent include an amine-containing silane such as 3-aminopropyltrimethoxysilane, 3-aminopropyltriethoxysilane, 3-aminopropyltriisopropoxysilane, 3-aminopropylmethyldimethoxysilane, 3-aminopropylmethyldiethoxysilane, 3-(2-aminoethylamino)propyltrimethoxysilane, 3-(2-aminoethylamino)propylmethyldimethoxysilane, 3-(2-aminoethylamino)propyltriethoxysilane, 3-(2-aminoethylamino)propylmethyldiethoxysilane, 3-(2-aminoethylamino)propyltriisopropoxysilane, 3-(2-(2-aminoethylamino)ethylamino)propyltrimethoxysilane, 3-(6-aminohexylamino)propyltrimethoxysilane, 3-ethylamino-2-methylpropyltrimethoxysilane, 3-ureidopropyltrimethoxysilane, 3-ureidopropyltriethoxysilane, 3-phenylaminopropyltrimethoxysilane, 3-benzylaminopropyltrimethoxysilane, 3-(vinylbenzylamino)propyltriethoxysilane, N-cyclohexylaminomethyltriethoxysilane, N-cyclohexylaminomethyl diethoxymethylsilane, N-phenylaminomethyltrimethoxysilane, N-butylaminopropyltrimethoxysilane, (2-aminoethylamino)methyltrimethoxysilane, N,N'-bis[3-(trimethoxysilyl)propyl]ethylenediamine, or bis(trimethoxysilylpropyl)amine; a ketimine-type silane such as N-(1,3-dimethylbutylidene)-3-(triethoxysilyl)-1-propaneamine, etc.

Among these, 3-aminopropyltrimethoxysilane, 3-(2-aminoethylamino)propyltrimethoxysilane, or 3-(2-aminoethylamino)propylmethyl dimethoxysilane is preferred from the viewpoint of good adhesion of a cured product. Only one type of the amino silane coupling agent may be used, or two or more types of the amino silane coupling agent may be used in combination. 3-(2-Aminoethylamino)propyltrimethoxysilane has been noted to be more irritating than other amino silanes. Irritancy can be mitigated by using 3-aminopropyltrimethoxysilane in combination rather than reducing an amount of 3-(2-aminoethylamino)propyltrimethoxysilane. A silane coupling agent that is oligomerized by partial condensation of the hydrolyzable silicon group is also suitably used from the viewpoints of safety and stability. One type or a plurality of types of the silane coupling agent may be condensed. Examples of the oligomerized silane coupling agent include Dynasylan 1146 manufactured by Evonik, etc. 3-Aminopropyltrimethoxysilane or 3-(2-aminoethylamino)propylmethyl dimethoxysilane is preferred from the viewpoint of good storage stability of a curable composition.

Specific examples of a silane coupling agent other than an amino silane coupling agent include an epoxy group-containing silane coupling agent such as 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane, or 2-(3,4-epoxycyclohexyl)ethyltriethoxysilane; an isocyanate group-containing silane coupling agent such as 3-isocyanatepropyl trimethoxysilane, 3-isocyanatepropyltriethoxysilane, 3-isocyanatepropylmethyldiethoxysilane, 3-isocyanatepropylmethyldimethoxysilane, (isocyanatomethyl)trimethoxysilane, or (isocyanatomethyl)dimethoxymethylsilane; a mercapto group-containing silane coupling agent such as 3-mercaptopropyltrimethoxysilane, 3-mercaptopropyltriethoxysilane, 3-mercaptopropylmethyldimethoxysilane, 3-mercaptopropylmethyldiethoxysilane, mercaptomethyltriethoxysilane; a carboxysilane coupling agent such as 2-carboxyethyltriethoxysilane, 2-carboxyethylphenylbis(2-methoxyethoxy)silane, or N-2-(carboxymethylamino)ethyl-3-aminopropyltrimethoxysilane; a vinyl-type unsaturated group-containing silane coupling agent such as vinyltrimethoxysilane, vinyltriethoxysilane, 3-methacryloyloxypropylmethyl dimethoxysilane, or 3-acryloyloxypropylmethyltriethoxysilane; a halogen-containing silane coupling agent such as 3-chloropropyltrimethoxysilane; an isocyanurate silane coupling agent such as tris(trimethoxysilyl)isocyanurate; etc. A partial condensate of the above-mentioned silane coupling agent can also be used. Examples of such a condensate include Dynasylan 6490, Dynasylan 6498, etc., manufactured by Evonik. An amino-modified silyl polymer, a silylated amino polymer, an unsaturated aminosilane complex, a phenylamino long-chained alkylsilane, an aminosilylated silicone, or a silylated polyester, all of which are derivatives obtained by modifying the above-mentioned condensate, can also be used as the silane coupling agent.

Among these, 3-glycidoxypropyl trimethoxysilane, 3-glycidoxypropyltriethoxysilane, or 3-glycidoxypropylmethyldimethoxysilane is preferred from the viewpoint of good adhesion of a cured product.

Only one type of the silane coupling agent may be used, or two or more types of the silane coupling agent may be used as a mixture. An amount of the silane coupling agent to be used is preferably 0.1 to 20 parts by weight and more preferably 0.5 to 10 parts by weight, relative to 100 parts by weight of a total weight of the polyoxyalkylene-based polymer (A) and the (meth)acrylic-based polymer (B).

### (Plasticizer)

A curable composition may include a plasticizer. The plasticizer can be added to adjust viscosity and a slumping property of a curable composition, as well as a mechanical property such as tensile strength or elongation of a cured product.

Specific examples of the plasticizer include a phthalic acid ester compound such as dibutyl phthalate, diisononyl phthalate (DINP), diheptyl phthalate, di(2-ethylhexyl)phthalate, diisodecyl phthalate (DIDP), or butylbenzyl phthalate; a terephthalic acid ester compound such as bis(2-ethylhexyl)-1,4-benzene dicarboxylate; a hydrogenerated compound of a phthalic acid ester such as diisononyl 1,2-cyclohexanedicarboxylate; an aliphatic polyvalent carboxylic acid ester compound such as dioctyl adipate, dioctyl sebacate, dibutyl sebacate, diisodecyl succinate, or acetyl tributyl citrate; an unsaturated fatty acid ester compound such as butyl oleate or methyl acetylricinolate; alkylsulfonic acid phenyl ester; a phosphoric acid ester compound such as tricresyl phosphate or tributyl phosphate; a trimellitic acid ester compound; chlorinated paraffin; a hydrocarbon-based oil such as alkyldiphenyl or partially hydrogenated terphenyl; a processing oil; an epoxy plasticizer such as an epoxidized soybean oil or benzyl epoxystearate, etc. A specific example of the terephthalic acid ester compound includes EASTMAN 168 (product name, manufactured by EASTMAN CHEMICAL). A specific example of non-phthalic ester compound includes Hexamoll DINCH (product name, manufactured by BASF). A specific example of the alkylsulfonic acid phenyl ester includes Mesamoll (product name, manufactured by LANXESS).

A polymeric plasticizer may also be used. Use of the polymeric plasticizer allows an initial physical property of a cured product to be maintained over a longer period of time than that of a small molecule plasticizer. Furthermore, a drying property (coatability) is improved when an alkyd paint is applied to the cured product.

Specific examples of the polymeric plasticizer include a vinyl-based polymer which is a polymer of a vinyl-based monomer; an ester of polyalkylene glycol or polyol such as diethylene glycol dibenzoate, triethylene glycol dibenzoate, or pentaerythritol ester; a polyester-based plasticizer obtained from a dibasic acid such as sebacic acid, adipic acid, azelaic acid, or phthalic acid and a dihydric alcohol such as ethylene glycol, diethylene glycol, triethylene glycol, propylene glycol, or dipropylene glycol; polyether polyol (polyoxyalkylene-based compound) such as polyethylene glycol, polypropylene glycol, or polytetramethylene glycol with a number average molecular weight of 500 or more and even 1,000 or more; a derivative obtained by converting a hydroxy group in the above-mentioned polyether polyol into an ester group, an ether group, etc.; polystyrene such as polystyrene or poly-α-methylstyrene; polybutadiene, polybutene, polyisobutylene, butadiene-acrylonitrile, polychloroprene, etc. The polymeric plasticizer is not limited thereto.

The polymeric plasticizer is preferably compatible with the polyoxyalkylene-based polymer (A) and/or the (meth)acrylic-based polymer (B). In this regard, a polyether or a vinyl-based polymer is preferred. When the polyether is used as the plasticizer, a surface curing property and a deep curing property are improved, and no cure delay after storage occurs. Among polyethers, polypropylene glycol is more preferred. The vinyl-based polymer is preferred from the viewpoints of compatibility with the polyoxyalkylene-based polymer (A) and/or the (meth)acrylic-based polymer (B), as well as weather resistance and heat resistance of a cured product. Among the vinyl-based polymers, an acrylic polymer and/or a methacrylic polymer is preferred, and an acrylic polymer such as polyacrylic acid alkyl ester is further preferred. A method for synthesizing the vinyl-based polymer is preferably a living radical polymerization method and further preferably an atom transfer radical polymerization method from the viewpoints of a narrow molecular weight distribution and obtaining a polymer with low viscosity. The so-called SGO process described in Japanese Unexamined Patent Application, Publication No. 2001-207157 in which an acrylic acid alkyl ester monomer is continuously mass-polymerized at high temperature and high pressure is also preferred as a method for producing the vinyl-based polymer.

A number average molecular weight of the polymeric plasticizer is preferably 500 to 15,000, more preferably 800 to 10,000, further preferably 1,000 to 8,000, particularly preferably 1,000 to 5,000, and most preferably 1,000 to 3,000. When the number average molecular weight of the polymeric plasticizer falls within the above range, an initial physical property of a cured product can be maintained over a long period of time while inhibiting the plasticizer from flowing out of the cured product over time due to heat or rainfall, etc., and a cured composition has an appropriate viscosity and good workability.

The number average molecular weight of the vinyl-based polymer is measured by a GPC method. A number average molecular weight of a polyether-based polymer is measured by a terminal group analysis method.

The polymeric plasticizer may or may not have a reactive silicon group. When the polymeric plasticizer has the reactive silicon group, the polymeric plasticizer can act as a reactive plasticizer and thus prevent migration of the plasticizer from a cured product. When the polymeric plasticizer has the reactive silicon group, a number of the reactive silicon group is preferably 1 or less and more preferably 0.8 or less per molecule on average. When a plasticizer having a reactive silicon group, particularly a polyether-based polymer having a reactive silicon group is used, its number average molecular weight needs to be lower than a number average molecular weight of the polyoxyalkylene-based polymer (A) and/or a number average molecular weight of the (meth)acrylic-based polymer (B).

Among the plasticizers described above, at least one selected from the group consisting of the phthalic acid ester, the hydrogenerated compound of a phthalic acid ester, and the polyoxyalkylene-based compound is preferred.

An amount of the plasticizer to be used is preferably 5 to 150 parts by weight, more preferably 10 to 120 parts by weight, and further preferably 20 to 100 parts by weight, relative to 100 parts by weight of a total weight of the polyoxyalkylene-based polymer (A) and the (meth)acrylic-based polymer (B). Use of the plasticizer in an amount falling within the above range allows a cured product with excellent mechanical strength to be formed while fully obtaining the desired effect achieved by using the plasticizer. The plasticizer may be used alone, or two or more thereof may be used in combination. A small molecule plasticizer and a polymeric plasticizer may be used in combination. The plasticizer may be incorporated into the polyoxyalkylene-based polymer (A) or the (meth)acrylic-based polymer (B) when the polyoxyalkylene-based polymer (A) or the (meth)acrylic-based polymer (B) is produced.

### (Solvent, diluent)

A curable composition may include a solvent or a diluent. The solvent or the diluent is not particularly limited. An aliphatic hydrocarbon, an aromatic hydrocarbon, an alicyclic hydrocarbon, a halogenated hydrocarbon, an alcohol, an ester, a ketone, an ether, etc., can be used as the solvent or the diluent. When the solvent or the diluent is used, a boiling point of the solvent is preferably 150°C or more, more preferably 200°C or more, and particularly preferably 250°C or more due to a problem of air contamination when a curable composition is used indoors. The solvent or the diluent may be used alone, or two or more thereof may be used in combination.

### (Thixotropic agent)

For the purpose of preventing sagging and improving workability, a curing composition may include a thixotropic agent, as necessary. The thixotropic agent is not particularly limited. Examples of the thixotropic agent include, for example, a polyamide wax; a hydrogenated castor oil derivative, etc. The thixotropic agent may be used alone, or two or more thereof may be used in combination. An amount of the thixotropic agent to be used is preferably 0.1 to 20 parts by weight, relative to 100 parts by weight of a total weight of the polyoxyalkylene-based polymer (A) and the (meth)acrylic-based polymer (B).

### (Antioxidant)

A curable composition may include an antioxidant (age resister). The antioxidant can be used to increase weather resistance of a cured product. As the antioxidant, a hindered phenolic compound, a monophenolic compound, a bisphenolic compound, or a polyphenolic compound may be exemplified. For example, IRGANOX 245, IRGANOX 1010, IRGANOX 1035, IRGANOX 1076, IRGANOX 1135, IRGANOX 1330, or IRGANOX 1520 (all manufactured by BASF); SONGNOX 1076 (manufactured by SONGWON), or BHT is exemplified as a suitable antioxidant. Similarly, a hindered amine-based light stabilizer such as TINUVIN 622LD, TINUVIN 144, TINUVIN 292, CHIMASSORB 944LD, or CHIMASSORB 119FL (all manufactured by BASF); ADK STAB LA-57, ADK STAB LA-62, ADK STAB LA-67, ADK STAB LA-63, or ADK STAB LA-68 (all manufactured by ADEKA CORPORATION); SANOL LS-2626, SANOL LS-1114, or SANOL LS-744 (all manufactured by Sankyo Lifetech Co., Ltd.); NOCRAC CD (manufactured by OUCHI SHINKO CHEMICAL INDUSTRIAL CO., LTD.), etc. can also be used. In addition, another antioxidant such as SONGNOX 4120, NAUGARD 445, or OKABEST CLX050 can also be used. Specific examples of the antioxidant are also described in Japanese Unexamined Patent Application, Publication Nos. H04-283259 and H09-194731. An amount of the antioxidant to be used is preferably 0.1 to 10 parts by weight and more preferably 0.2 to 5 parts by weight, relative to 100 parts by weight of a total weight of the polyoxyalkylene-based polymer (A) and the (meth)acrylic-based polymer (B).

### (Photostabilizer)

A curable composition may include a photostabilizer. The photostabilizer can be used to prevent photooxidative degradation of a cured product. Examples of the photostabilizer include a benzotriazole-based compound, a hindered amine-based compound, a benzoate-based compound, etc. An amount of the photostabilizer to be used is preferably 0.1 to 10 parts by weight and more preferably 0.2 to 5 parts by weight, relative to 100 parts by weight of a total weight of the polyoxyalkylene-based polymer (A) and the (meth)acrylic-based polymer (B). Specific examples of the photostabilizer are described in, for example, Japanese Unexamined Patent Application, Publication No. H09-194731.

### (UV absorber)

A curable composition may include a UV absorber. The UV absorber can be used to increase weather resistance on a surface of a cured product. As the UV absorber, a benzophenone-based compound, a benzotriazole-based compound, a salicylate-based compound, a triazine-based compound, a substituted tolyl-based compound, a metal chelate-based compound, etc., may be exemplified. Among these, the benzotriazole-based compound is particularly preferred. Specific examples of the benzotriazole-based compound include TINUVIN 234, TINUVIN 326, TINUVIN 327, TINUVIN 328, TINUVIN 329, TINUVIN 350, TINUVIN 571, TINUVIN 900, TINUVIN 928, TINUVIN 1130, TINUVIN 1600 (all manufactured by BASF); SONGSORB 3290 (manufactured by SONGWON). Specific examples of the triazine-based compound include TINUBIN 400, TINUBIN 405, TINUBIN 477, TINUBIN 1577ED (all manufactured by BASF); SONGSORB CS400, SONGSORB 1577 (manufactured by SONGWON). A specific example of the benzophenone-based compound includes SONGSORB 8100 (manufactured by SONGWON). An amount of the UV absorber to be used is preferably 0.1 to 10 parts by weight and more preferably 0.2 to 5 parts by weight, relative to 100 parts by weight of a total weight of the polyoxyalkylene-based polymer (A) and the (meth)acrylic-based polymer (B). The phenolic antioxidant or the hindered phenolic antioxidant; the hindered amine-based light stabilizer; and the benzotriazole-based UV absorber are preferably used in combination. Addworks IBC760 (manufactured by Clariant) can be used as a product including a mixture of an antioxidant, a light stabilizer, and a UV absorber.

### (Physical property modifier)

A curable composition may include a physical property modifier for adjusting a tensile property of a cured product, as necessary. The physical property modifier is not particularly limited. Examples of the physical property modifier include an alkyl alkoxysilane such as methyltrimethoxysilane, dimethyldimethoxysilane, trimethylmethoxysilane, or n-propyltrimethoxysilane; an alkyl isopropenoxysilane such as dimethyldiiisopropenoxysilane, methyltriisopropenoxysilane, or 3-glycidoxypropylmethyldiisopropenoxy silane; an alkoxysilane having a functional group such as 3-glycidoxypropylmethyldimethoxysilane, 3-glycidoxypropyltrimethoxysilane, vinyltrimethoxysilane, vinyldimethylmethoxysilane, 3-aminopropyltrimethoxysilane, N-2-aminoethyl-3-aminopropylmethyl dimethoxysilane, 3-mercaptopropyltrimethoxysilane, or 3-mercaptopropylmetyl dimethoxysilane; a silicone varnish; a polysiloxane; etc. The physical property modifier can be used to increase hardness, or, conversely, decrease hardness to produce elongation at break of a cured product. The physical property modifier may be used alone, or two or more thereof may be used in combination.

In particular, a compound from which a compound having a monovalent silanol group in a molecule is produced through hydrolysis has an action of decreasing a modulus of a cured product without deteriorating surface tackiness of the cured product. The compound from which a compound having a monovalent silanol group in a molecule is produced through hydrolysis is particularly preferably a compound from which trimethylsilanol is produced. Examples of the compound from which a compound having a monovalent silanol group in a molecule is produced through hydrolysis include those listed in Japanese Unexamined Patent Application, Publication No. H5-117521. A derivative of an alkyl alcohol such as hexanol, octanol, or decanol from which trialkylsilanol such as trimethylsilanol is produced through hydrolysis, or a derivative of a polyhydric alcohol having three or more hydroxy groups such as trimethylpropane, glycerin, pentaerythritol, or sorbitol from which trialkylsilanol such as trimethylsilanol is produced through hydrolysis as described in Japanese Unexamined Patent Application, Publication No. H11-241029 can also be used. A derivative of an oxyalkylene polymer that produces a silicon compound from which a trialkyl silanol such as trimethylsilanol is produced through hydrolysis as described in Japanese Unexamined Patent Application, Publication No. H7-258534 can also be used. Furthermore, a polymer having a cross-linkable, hydrolyzable silicon-containing group and a silicon-containing group that can be converted into a monosilanol-containing compound through hydrolysis as described in Japanese Unexamined Patent Application, Publication No. H6-279693 can also be used. The physical property modifier is used in an amount in a range of 0.1 to 20 parts by weight and preferably 0.5 to 10 parts by weight, relative to 100 parts by weight of a total weight of the polyoxyalkylene-based polymer (A) and the (meth)acrylic-based polymer (B).

### (Tackifying resin)

A curable composition may include a tackifying resin for the purpose of enhancing adhesion or adherence of a cured product to a substrate, etc. The tackifying resin is not particularly limited and any tackifying resin commonly used in various curable compositions can be used. Specific examples of the tackifying resin include a terpene-based resin, an aromatic modified terpene resin, a hydrogenated terpene resin, a terpene-phenolic resin, a phenolic resin, a modified phenolic resin, a xylene-phenolic resin, a cyclopentadiene-phenolic resin, a coumarone-indene resin, a rosin-based resin, a rosin ester resin, a hydrogenated rosin ester resin, a xylene resin, a low molecular weight polystyrene resin, a styrene copolymer resin, a styrene-based block copolymer, a hydrogenated styrene-based block copolymer, a petroleum resin, a hydrogenated petroleum resin, a DCPD resin, etc. Examples of the petroleum resin include, for example, a C5 hydrocarbon resin, a C9 hydrocarbon resin, a C5C9 hydrocarbon copolymer resin, etc. These may be used alone, or two or more thereof may be used in combination. An amount of the tackifying resin to be used is preferably 2 to 100 parts by weight, more preferably 5 to 50 parts by weight, and particularly preferably 5 to 30 parts by weight, relative to 100 parts by weight of a total weight of the polyoxyalkylene-based polymer (A) and the (meth)acrylic-based polymer (B). Use of the tackifying resin in an amount falling within such a range allows formation of a cured product with good adhesion or adherence to a substrate. Furthermore, a curable composition has appropriate viscosity and good handleability.

### (Epoxy group-containing compound)

A curable composition may include an epoxy group-containing compound. The epoxy group-containing compound can be used to increase resiliency of a cured product. As the epoxy group-containing compound, an epoxidized unsaturated oil, an epoxidized unsaturated fatty acid ester, an alicyclic epoxy compound, an epichlorohydrin derivative, or a mixture thereof may be exemplified. Specific examples of the epoxy group-containing compound include an epoxidized soybean oil, an epoxidized linseed oil, bis(2-ethylhexyl)-4,5-epoxycyclohexan-1,2-dicarboxylate (E-PS), epoxyoctyl stearate, epoxybutyl stearate, etc. An amount of the epoxy group-containing compound to be used is preferably 0.5 to 50 parts by weight, relative to 100 parts by weight of a total weight of the polyoxyalkylene-based polymer (A) and the (meth)acrylic-based polymer (B).

### (Epoxy resin)

A curable composition may include an epoxy resin. A curable composition including an epoxy resin is preferred as an adhesive, especially an adhesive for an exterior wall tile. Examples of the epoxy resin include a bisphenol A-type epoxy resin, a novolac-type epoxy resin, etc. A ratio of a total weight of the polyoxyalkylene-based polymer (A) and the (meth)acrylic-based polymer (B) to a weight of the epoxy resin (Weight of polymer (A) and Weight of polymer (B))/(Weight of epoxy resin) is preferably in a range of 100/1 to 100/100 by weight. When the polymer (A) and the polymer (B), and the epoxy resin are used at the above-mentioned ratio, a high-strength cured product with excellent impact strength and toughness can be easily formed. When the epoxy resin is used, a curable composition may include a curing agent along with the epoxy resin. A type of the curing agent is not particularly limited and any commonly used curing agent may be used. An amount of the curing agent to be used is preferably 0.1 to 300 parts by weight, relative to 100 parts by weight of the epoxy resin.

### (Photocurable material)

A curable composition may include a photocurable material. The photocurable material can be used to form a film of the photocurable material on a surface of a cured product to thereby improve tackiness and weather resistance of the cured product. Various compounds such as an organic monomer, an oligomer, or a resin have been known as the photocurable material. Many compositions each including the photocurable material have also been known. Representative examples of the photocurable material include an unsaturated acrylic compound, a vinyl polycinnamate, an azide resin, etc. Examples of the unsaturated acrylic compound include a monomer or oligomer having one or more acrylic or methacrylic unsaturated groups, or a mixture thereof. An amount of the photocurable material to be used is preferably 0.1 to 20 parts by weight and more preferably 0.5 to 10 parts by weight, relative to 100 parts by weight of a total weight of the polyoxyalkylene-based polymer (A) and the (meth)acrylic-based polymer (B). Use of the photocurable material in an amount falling within such a range allows a flexible cured product with excellent weather resistance and reduced cracking to be easily formed.

### (Oxygen-curable material)

A curable composition may include an oxygen-curable material. As the oxygen-curable material, an unsaturated compound capable of reacting with oxygen in the air may be exemplified. When the curable composition includes the oxygen-curable material, the oxygen-curable material reacts with oxygen in the air to form a cured film in the proximity of a surface of a cured product. The formation of the cured film on the surface of the cured product prevents stickiness or adhesion of dust or dirt on the surface of the cured product. Specific examples of the oxygen-curable material include a drying oil such as a tung oil or a linseed oil; various alkyd resins that are obtained by modifying the drying oil; an acrylic polymer, an epoxy-based resin, or a silicon resin that is modified with the drying oil; a liquid polymer such as 1,2-polybutadiene, 1,4-polybutadiene, or a C5 to C8 diene polymer obtained by polymerizing or copolymerizing a diene-based compound such as butadiene, chloroprene, isoprene, or 1,3-pentadiene, etc. These may be used alone, or two or more thereof may be used in combination. An amount of the oxygen-curable material to be used is preferably 0.1 to 20 parts by weight and more preferably 0.5 to 10 parts by weight, relative to 100 parts by weight of a total weight of the polyoxyalkylene-based polymer (A) and the (meth)acrylic-based polymer (B). Use of the oxygen-curable material in an amount falling within such a range makes it easier to form a cured product whose surface is less likely to be contaminated by dust or dirt, and which has an excellent mechanical property such as a tensile property. As described in Japanese Unexamined Patent Application, Publication No. H03-160053, the oxygen-curable material is preferably used in combination with the photocurable material.

### <<Preparation of curable composition>>

A curable composition can be prepared as a one-part curable composition of which all components are combined, sealed, and stored in advance, and then cured with moisture in the air after construction. Furthermore, the curable composition can also be prepared as a two-part curable composition which includes a combined material serving as a curing agent, and a polymer composition including the polyoxyalkylene-based polymer (A) and the (meth)acrylic-based polymer to be mixed with each other before use, the combined material being prepared separately from the polymer composition by combining components such as a curing catalyst, a filler, a plasticizer, water, etc. From the viewpoint of workability, the one-part curable composition is preferred.

In the case of the one-part curable composition, components thereof are all combined in advance. Therefore, a moisture-containing component is preferably dehydrated and dried in advance before use or dehydrated under reduced pressure during combining and kneading. Furthermore, in addition to the dehydration and drying method, an alkoxy silane compound such as methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane can be added to the curable composition to thereby further improve storage stability of the curable composition.

### <<Application of curable composition>>

A curable composition can be used as a sealant, an industrial adhesive, a composition for forming a waterproof coating, an adhesive raw material, etc. The curable compositions can also be used as a sealing agent for a building, a ship, an automobile, or a road. In addition, the curable composition can adhere to a wide range of substrates such as glass, porcelain, wood, metal, or a molded resin, either alone or with the help of a primer. Therefore, the curable composition can also be used as various types of sealing or adhesive compositions. The curable composition can also be used as a contact adhesive as well as a regular adhesive. Furthermore, the curable composition is useful as a food packaging material, a cast rubber material, a moldmaking material, or a paint.

### EXAMPLES

The present invention will be specifically described with reference to Examples. Note that, the present invention is not limited to the following Examples.

### (Molecular weight)

A number average molecular weight Mn or a weight average molecular weight Mw in Examples is a GPC molecular weight as measured under the following conditions:
Liquid feeding system: HLC-8120GPC manufactured by Tosoh Corporation;
Column: TSKgel Super H series manufactured by Tosoh Corporation;
Solvent: THF;
Molecular weight: in terms of polystyrene; and
Measurement temperature: 40°C.

### (Average number of reactive silicon group)

An average number of a reactive silicon group per molecule for polymers described in Examples was calculated by NMR measurement.

### (Glass transition temperature Tg)

A glass dislocation temperature Tg was determined from the Fox equation below: $1 / \left(Tg\left(K\right)\right) = Σ \left(Mi/Tgi\right)$ in which Mi represents a weight fraction of a monomer i component constituting a polymer and Tgi represents a glass transition temperature (K) of a homopolymer of the monomer i.

### [Synthesis Example 1]

Propylene oxide was polymerized using polyoxypropylene glycol having a number average molecular weight of about 4,500 serving as an initiator and a zinc hexacyanocobaltate-glyme complex catalyst to thereby obtain polyoxypropylene (P-1) having hydroxy groups at both ends and having a number average molecular weight of 27,900 (terminal group-based molecular weight: 17,700) and a molecular weight distribution Mw/Mn of 1.21. Then, 1.2 mole equivalents of sodium methoxide relative to the hydroxy groups in the resulting hydroxy group-terminated polyoxypropylene (P-1) was added thereto as a 28% methanol solution. The methanol was distilled off by vacuum devolatilization, and then 1.5 mole equivalents of allyl chloride relative to the hydroxy groups in the polymer (P-1) was further added thereto to thereby convert the terminal hydroxy groups into allyl groups. Then, unreacted allyl chloride was removed by devolatilization under reduced pressure. The resulting crude polyoxypropylene was mixed and stirred with n-hexane and water, the water was removed by centrifugation, and then the hexane was devolatilized under reduced pressure from the resulting hexane solution to thereby remove a metal salt in the polymer. Thus, polyoxypropylene (Q-1) having an allyl group at its end was obtained. Fifty microliters of a platinum-divinyldisiloxane complex solution (3% by weight isopropanol solution in terms of platinum) was added to 500 g of the polymer (Q-1), and while the resultant was stirred, 4.8 g of dimethoxymethylsilane was slowly added dropwise thereto. After the resulting mixed solution was reacted at 100°C for 2 hours, unreacted dimethoxymethylsilane was distilled off under reduced pressure to thereby obtain polyoxypropylene (A-1) having a dimethoxymethylsilyl group at its end and having a number average molecular weight of 28,500. The polymer (A-1) was found to have 0.8 dimethoxymethylsilyl groups per end on average and 1.6 dimethoxymethylsilyl groups per molecule on average.

### [Synthesis Example 2]

A solution of 6.2 g of azobis-2-methylbutyronitrile serving as a polymerization initiator dissolved in a mixture including 34.3 g of methyl methacrylate, 188.7 g of butyl acrylate, 44.6 g of 2-ethylhexyl acrylate, 68.6 g of stearyl methacrylate, 6.9 g of γ-methacryoxypropyldimethoxymethylsilane, and 55.6 g of isobutyl alcohol (IBA) was added dropwise to 81.4 g of IBA which had been heated to 105°C in a reaction vessel for 3.5 hours. Next, a solution of 0.7 g of azobis-2-methylbutyronitrile serving as a polymerization initiator dissolved in 13.1 g of IBA was added dropwise into the reaction vessel for 1 hour. The resultant was then post-polymerized for 2 hours to obtain a solution of a (meth)acrylic copolymer (B-1) having a dimethoxymethylsilyl group in isobutyl alcohol with a solid content concentration of 70% by weight, a number average molecular weight of 8,700, and a weight average molecular weight of 18,900.

### [Synthesis Example 3]

A solution of 1.1 g of azobis-2-methylbutyronitrile serving as a polymerization initiator dissolved in a mixture including 35.2 g of methyl methacrylate, 193.6 g of butyl acrylate, 45.8 g of 2-ethylhexyl acrylate, 70.4 g of stearyl methacrylate, 3.5 g of γ-methacryoxypropyldimethoxymethylsilane, and 43.9 g of isobutyl alcohol (IBA) was added dropwise to 90.3 g of IBA which had been heated to 105°C in a reaction vessel for 3.5 hours. Next, a solution of 0.3 g of azobis-2-methylbutyronitrile serving as a polymerization initiator dissolved in 15.7 g of IBA was added dropwise into the reaction vessel for 1 hour. The resultant was then post-polymerized for 2 hours to obtain a solution of a (meth)acrylic-based polymer (B-2) having a dimethoxymethylsilyl group in isobutyl alcohol with a solid content concentration of 70% by weight, a number average molecular weight of 15,100, and a weight average molecular weight of 41,600.

### [Synthesis Example 4]

A solution of 1.1 g of azobis-2-methylbutyronitrile serving as a polymerization initiator dissolved in a mixture including 34.9 g of methyl methacrylate, 191.7 g of butyl acrylate, 45.3 g of 2-ethylhexyl acrylate, 69.7 g of stearyl methacrylate, 7.0 g of γ-methacryoxypropyldimethoxymethylsilane, and 43.5 g of isobutyl alcohol (IBA) was added dropwise to 90.9 g of IBA which had been heated to 105°C in a reaction vessel for 3.5 hours. Next, a solution of 0.3 g of azobis-2-methylbutyronitrile serving as a polymerization initiator dissolved in 15.6 g of IBA was added dropwise into the reaction vessel for 1 hour. The resultant was then post-polymerized for 2 hours to obtain a solution of a (meth)acrylic polymer (B-3) having a dimethoxymethylsilyl group in isobutyl alcohol with a solid content concentration of 70% by weight, a number average molecular weight of 15,500, and a weight average molecular weight of 43,500.

### [Synthesis Example 5]

A solution of 1.1 g of azobis-2-methylbutyronitrile serving as a polymerization initiator dissolved in a mixture including 34.5 g of methyl methacrylate, 189.8 g of butyl acrylate, 44.9 g of 2-ethylhexyl acrylate, 69.0 g of stearyl methacrylate, 10.4 g of γ-methacryoxypropyldimethoxymethylsilane, and 43.1 g of isobutyl alcohol (IBA) was added dropwise to 91.5 g of IBA which had been heated to 105°C in a reaction vessel for 3.5 hours. Next, a solution of 0.3 g of azobis-2-methylbutyronitrile serving as a polymerization initiator dissolved in 15.5 g of IBA was added dropwise into the reaction vessel for 1 hour. The resultant was then post-polymerized for 2 hours to obtain a solution of a (meth)acrylic-based polymer (B-4) having a dimethoxymethylsilyl group in isobutyl alcohol with a solid content concentration of 70% by weight, a number average molecular weight of 14,800, and a weight average molecular weight of 41,000.

### [Synthesis Example 6]

A solution of 1.1 g of azobis-2-methylbutyronitrile serving as a polymerization initiator dissolved in a mixture including 103.5 g of methyl methacrylate, 131.2 g of butyl acrylate, 34.5 g of 2-ethylhexyl acrylate, 69.0 g of stearyl methacrylate, 10.4 g of γ-methacryoxypropyldimethoxymethylsilane, and 43.1 g of isobutyl alcohol (IBA) was added dropwise to 91.5 g of IBA which had been heated to 105°C in a reaction vessel for 3.5 hours. Next, a solution of 0.3 g of azobis-2-methylbutyronitrile serving as a polymerization initiator dissolved in 15.5 g of IBA was added dropwise into a reaction liquid for 1 hour. The resultant was then post-polymerized for 2 hours to obtain a solution of a (meth)acrylic-based polymer (B-5) having a dimethoxymethylsilyl group in isobutyl alcohol with a solid content concentration of 70% by weight, a number average molecular weight of 15,800, and a weight average molecular weight of 39,200.

### (Measurement of physical property of cured product)

Four grams (solid content 2.8 g) of a solution of any of the (meth)acrylic-based polymer (B-1) to (B-5) obtained in Synthetic Examples 2 to 6 in isobutyl alcohol was mixed with 0.056 g of NEOSTANN U-220H (NITTO KASEI CO., LTD: dibutyltin bisacetylacetonate), and then centrifuged to remove a foam. The resulting mixture liquid was applied to a Teflon sheet with a 10 mil applicator. The thus-formed coating film was cured at room temperature for 30 minutes, at 105°C for 1 hour, at 23°C for 3 days, and then at 50°C for 4 days to obtain a sheet of a cured product. Test specimens each having a width of 5 mm were produced from the resulting sheet, and subjected to a tension test at a tensile speed of 10 mm/min using AUTOGRAPH (AGS-J) manufactured by Shimadzu Corporation to thereby measure breaking strength TB (N/mm²) and elongation at break EB (%). The results are shown in Table 1.

**[Table 1]**

| | | (Meth)acrylic-based polymer (B) | | | | |
|---|---|---|---|---|---|---|
| | | B-1 | B-2 | B-3 | B-4 | B-5 |
| Physical property of polymer | Mn | 8700 | 15100 | 15500 | 14800 | 15800 |
| | Mw | 18900 | 41600 | 43500 | 41000 | 39200 |
| | Mw/Mn | 2.17 | 2.75 | 2.81 | 2.77 | 2.48 |
| | Tg | -54°C | -54°C | -54°C | -54°C | 34°C |
| Physical property of cured product | TB (N/mm²) | Uncured | Uncured | 0.031 | 0.085 | 0.270 |
| | EB(%) | | | 32 | 37 | 100 |

### [Comparative Example 1]

First, 60 parts by weight of the polyoxypropylene (A-1) obtained in Synthesis Example 1 and an isobutyl alcohol solution containing, as a solid content, 40 parts by weight of the (meth)acrylic polymer (B-1) obtained in Synthesis Example 2 were mixed, and thereafter, the isobutyl alcohol was devolatilized by heating. The resulting mixture was mixed with 160 parts by weight of HAKUENKA CCR (manufactured by Shiraishi Kogyo Kaisha, Ltd.: precipitated calcium carbonate), 54 parts by weight of WHITON SB (manufactured by SHIRAISHI CALCIUM KAISHA, LTD.: heavy calcium carbonate), 5 parts by weigh of TIPAQUE R820 (manufactured by ISHIHARA SANGYO KAISHA, LTD.: titanium oxide), 90 parts by weight of DINP (manufactured by J-PLUS Co., Ltd.: diisodecyl phthalate), 2 parts by weight of DISPARLON 6500 (manufactured by Kusumoto Chemicals, Ltd.: fatty acid amide wax), 1 part by weight of TINUVIN 326 (manufactured by BASF: benzotriazole-based UV absorber), and 1 part by weight of LS770 (manufactured by Ciba Specialty Chemicals: hindered amine-based light stabilizer) and passed through three paint rolls three times to achieve uniform dispersion. Then, the resulting mixture was dehydrated under reduced pressure at 120°C for 2 hours. The thus-dehydrated mixture was cooled to 50°C or less, and then 3 parts by weight of A-171 (manufactured by Momentive: vinyltrimethoxysilane) and 3 parts by weight of A-1120 (manufactured by Momentive: N-(β-aminoethyl)-γ-aminopropyltrimethoxysilane) were added to the mixture and mixed together. Two parts by weight of NEOSTANN U-220H (manufactured by NITTO KASEI CO., LTD: dibutyltin bisacetylacetonate) was then added to the mixture and kneaded to obtain a curable composition. The resulting curable composition was sealed in a cartridge, which was a moisture-proof container, to obtain a one-part curable composition.

### (Dumbbell tensile physical property)

The resulting curable composition was poured into a mold and cured at 23°C and 50% RH for 3 days and further at 50°C for 4 days to thereby produce a sheet-shaped cured product having a thickness of about 3 mm. The sheet-shaped cured product was punched out into the Dumbbell type No.3, which was subjected to a tensile strength test under an atmosphere at 23°C and 50% RH to thereby measure a modulus at 100% elongation (M100). Breaking strength TB (MPa) and elongation at break EB (%) were also measured. The measurement was performed at a tension speed of 200 mm/min with AUTOGRAPH (AGS-J, manufactured by SHIMADZU CORPORATION). The results are shown in Table 2.

### (Weather resistance test)

The resulting curable composition was poured into a mold and cured at 23°C and 50% RH for 3 days and further at 50°C for 4 days to thereby produce a sheet-shaped cured product having a thickness of about 1 mm. The resulting sheet-shaped cured product was cut into 20 mm x 20 mm test pieces. The test pieces were subjected to a weather resistance test using METAL WEATHER weather meter (DAIPLA WINTES CO., LTD., product name: DAIPLA METAL WEATHER CW-R8PL-A) under the conditions of an illuminance of 125 mW/cm², a black panel temperature of 63°C, and spraying of pure water for 2 minutes every 2 hours. A surface of the cured product was observed every 70 hours of exposure. Table 2 shows a time point when a crack was observed on a surface of the test piece.

### [Comparative Example 2 and Examples 1 to 3]

Curable compositions were obtained in the same manner as in Comparative Example 1, except that the (meth)acrylic-based polymer (B-1) was changed to the (meth)acrylic-based polymers listed in Table 2. Each of the resulting curable compositions was subjected to the dumbbell tensile physical property test and the weather resistance test according to the methods described above. The results are shown in Table 2.

**[Table 2]**

| | | Comparative Example 1 | Comparative Example 2 | Example 1 | Example 2 | Example 3 |
|---|---|---|---|---|---|---|
| Polyoxyalkylene-based polymer (A) | A-1 | 60 | 60 | 60 | 60 | 60 |
| (Meth) acrylic-based polymer (B) | B-1 | 40 | - | - | - | - |
| | B-2 | - | 40 | - | - | - |
| | B-3 | - | - | 40 | - | - |
| | B-4 | - | - | - | 40 | - |
| | B-5 | - | - | - | - | 40 |
| Dumbbell physical property | M100 (MPa) | 0.198 | 0.217 | 0.346 | 0.427 | 0.439 |
| | TB (MPa) | 1.067 | 1.051 | 1.237 | 1.242 | 1.325 |
| | EB (%) | 830 | 770 | 630 | 523 | 509 |
| Weather resistance | Crack initiation time (hr) | 280 | 350 | 490 | 770 | 910 |

For the polymer (B-1) and the polymer (B-2), a physical property (TB) of a cured product could not be measured for the (meth)acrylic-based polymer (B) alone. When the curable compositions of Comparative Examples 1 and 2 including the polymer (B-1) and the polymer (B-2) were used, a crack initiation time in the weather resistance evaluation was short, that is, 280 hours and 350 hours, respectively. In contrast, the polymer (B-3) to the polymer (B-5) had a physical property (TB) of a cured product of 0.020 N/mm² or more for the (meth)acrylic-based polymer (B) alone. When the curable compositions of Examples 1 to 3 including the polymer (B-3) to the polymer (B-5) were used, a crack initiation time in the weather resistance test was 490 hours or more, and a value of elongation at break (EB) was also high at 500% or more.

## Claims

1. A curable composition comprising:
a polyoxyalkylene-based polymer having a reactive silicon group (A); and
a (meth)acrylic-based polymer having a reactive silicon group (B),
the (meth)acrylic-based polymer (B) having a molecular chain comprising a structural unit derived from a (meth)acrylic ester,
the (meth)acrylic-based polymer (B) having a number average molecular weight Mn of 10,000 to 20,000 in terms of polystyrene as measured by gel permeation chromatography,
the (meth)acrylic-based polymer (B) having a ratio Mw/Mn of a weight average molecular weight Mw in terms of polystyrene as measured by gel permeation chromatography to the Mn of 1.6 or more,
the (meth)acrylic-based polymer (B) having a glass transition temperature of 0°C or less,
a cured product of the (meth)acrylic-based polymer (B) having a breaking strength of 0.020 to 0.300 N/mm²,
the breaking strength being measured by a method comprising:
mixing 100 parts by weight of the (meth)acrylic-based polymer (B) with 2 parts by weight of dibutyltin diacetylacetonate to obtain a mixture,
curing the mixture to produce a sheet having a thickness of 0.25 ± 0.05 mm,
cutting a strip specimen having a width of 5 mm from the sheet, and
subjecting the strip specimen to a tension test at a tensile speed of 10 mm/min.

2. The curable composition according to claim 1, wherein the breaking strength is 0.050 to 0.300 N/mm².

3. The curable composition according to claim 1, wherein the breaking strength is 0.050 to 0.200 N/mm².

4. A cured product of the curable composition according to any one of claims 1 to 3.
